# EUROPEAN PATENT APPLICATION

(11) **EP 3 133 500 A1**
(43) Date of publication of application: **22.02.2017**
(21) Application number: 16184519.3
(22) Date of filing: 17.08.2016
(51) Int. Cl.: G06F 13/40

(54) **METHOD TO TRANSMIT AND RECEIVE MPEG-TS OVER A THUNDERBOLT CABLE**

(30) Priority: 19.08.2015 US 201514830680
(71) Applicant: OpenTV, Inc., San Francisco, CA 94111 (US)
(72) Inventor: PARK, Joonyoung, San Francisco, CA California 94111 (US); LEE, Ki Young, San Francisco, CA California 94111 (US); LEE, Jun Seo, San Francisco, CA California 94111 (US)
(74) Representative: Kramer, Dani

(57) **Abstract**

Example embodiments provide systems and methods for managing the transmission and reception of MPEG-TS data provided over a Thunderbolt cable 104. A transmitter unit 204 receives a MPEG-TS and an Ethernet signal. The transmitter unit 204 then multiplexes data from the MPEG-TS with data from the Ethernet signal as the data from the MPEG-TS and the Ethernet signal is stored into a buffer memory 214, 216. When the buffer memory 214, 216 reaches a predetermined threshold size, the transmitter unit 204 writes the multiplexed data stored in the buffer memory as packet data to a streaming buffer in a PCIe core 220. The packet data in the streaming buffer is transmitted as a PCIe signal to a receiver unit 304 over a cable.

## Description

### FIELD

The present disclosure relates generally to data transmission, and in a specific example embodiment, to mechanisms and processes for managing transmission of MPEG transport stream (MPEG-TS) data using a multiplexed signal over a Thunderbolt cable.

### BACKGROUND

With a conventional hybrid set top box (STB), at least three different inputs are required: a Pay-television signal in the form of cable or satellite, an Ethernet signal, and power. As such, the STB requires multiple connector ports in its rear panel for various cables. The cables include one or more of, for example, a coaxial (coax) cable for carrying MPEG signals, an Ethernet cable for carrying the Ethernet signal, and a cable for power. The use of multiple cables causes the rear panel and surrounding area to be cluttered. Additionally, more components are required in the STB to handle all these connector ports.

Aspects and embodiments of the present invention are set out in the appended claims. These and other aspects and embodiments of the invention are also described herein.

According to a first aspect of the present invention, there is provided a method comprising: receiving, at a transmitter unit, a MPEG-TS and an Ethernet signal; multiplexing, by the transmitter unit, data from the MPEG-TS with data from the Ethernet signal as the data from the MPEG-TS and the Ethernet signal is stored into a buffer memory; detecting that the buffer memory reaches a predetermined threshold size; in response to the detecting that the buffer memory reaches the predetermined threshold size, writing, by a CPU core of the transmitter unit, the multiplexed data stored in the buffer memory as packet data to a streaming buffer in a PCIe core; and transmitting the packet data in the streaming buffer as a PCIe signal to a receiver unit over a cable, the PCIe signal comprising the data from the MPEG-TS.

Optionally, the predetermined threshold size for the buffer memory that triggers the writing of the packet data to the streaming buffer is 188 bytes; and the writing comprises writing 188 bytes of packet data into the streaming buffer.

Optionally, the transmitter unit is located within a power adapter and the receiver unit is located within a set top box.

Optionally, the method further comprises: determining that the buffer memory is full; and storing the multiplexed data to a second buffer memory in response to the determining that the buffer memory is full.

Optionally, the method further comprises in response to the detecting that the buffer memory reaches the predetermined threshold size, generating an interrupt to the CPU core, the CPU core going idle after sending instructions to cause the multiplexing.

Optionally, the method further comprises receiving, by the CPU core, the interrupt; and in response to receiving the interrupt, triggering the writing of the multiplexed data stored in the buffer memory as the packet data to the streaming buffer.

Optionally, the method further comprises flagging, by the CPU core, the packet data as comprising MPEG-TS data.

Optionally, the method further comprises: receiving, by the transmitter unit, a data-carrying signal from a channel demodulator; parsing the data-carrying signal; and determining that parsed data from the data-carrying signal contains MPEG-TS data, the multiplexing being triggered by the determining that the parsed data contains MPEG-TS data.

Optionally, the cable comprises a Thunderbolt cable or a USB-C cable.

According to a further aspect of the present invention, there is provided a power adapter comprising: a transmitter unit including: a signal interface to receive a MPEG-TS and an Ethernet signal, and to multiplex data from the MPEG-TS with data from the Ethernet signal, a first buffer memory to store the multiplexed data that includes the data from the MPEG-TS and data from the Ethernet signal, a CPU core to detect that the first buffer memory reaches a predetermined threshold size, and to write the multiplexed data stored in the first buffer memory as packet data to a streaming buffer in response to the first buffer memory reaching the predetermined threshold size, and a PCIe core, comprising the streaming buffer, to transmit the packet data in the form of a PCIe signal via a PCIe bus to an interface controller; and the interface controller to transmit the PCIe signal received from the PCIe core through a cable to a receiver unit.

Optionally, the power adapter further comprises a demodulator to: receive a carrier signal; separate out a data-carrying signal from the carrier signal; and pass the data-carrying signal to the signal interface, the signal interface to parse the data-carrying signal and determine that parsed data from the data-carrying signal contains MPEG-TS data.

Optionally, the first buffer memory is further to: detect the capacity of the first buffer memory is reached; and set a flag indicating that the first buffer memory has reached capacity, the flag causing a signal to be sent to the CPU core.

Optionally, the signal causes the CPU core to transmit instructions to the signal interface to store the multiplexed data to a second buffer memory.

Optionally, the signal wakes up the CPU core from an idle state, the CPU core entering the idle state after sending instructions to the signal interface to multiplex data from the MPEG-TS with data from the Ethernet signal.

Optionally, the first buffer memory is further to: detect that the first buffer memory has reached the predetermined threshold size; and generate an interrupt to the CPU core, the interrupt causing the CPU core to detect that the first buffer memory has reached the predetermined threshold size.

Optionally, the CPU core is further to flag the packet data as comprising MPEG-TS data as the CPU core writes the multiplexed data stored in the first buffer memory as packet data to the streaming buffer.

According to a further aspect of the present invention, there is provided a system comprising: means for receiving a MPEG-TS and an Ethernet signal; means for multiplexing data from the MPEG-TS with data from the Ethernet signal; means for storing the multiplexed data into a buffer memory; means for writing the multiplexed data stored in the buffer memory as packet data to a streaming buffer in response to the buffer memory reaching a predetermined threshold size; and means for transmitting the packet data in the streaming buffer as a PCIe signal to a receiver unit over a cable.

Optionally, the means for writing writes 188 bytes of packet data into the streaming buffer.

Optionally, the system further comprises means for generating an interrupt to a CPU core in response to the buffer memory reaching the predetermined threshold size, the CPU core going idle after sending instructions to the means for multiplexing to multiplex the data from the MPEG-TS with the data from the Ethernet signal.

Optionally, the CPU core receives the interrupt; and in response to the interrupt, causing the means for writing to write the multiplexed data stored in the buffer memory as the packet data to the streaming buffer.

Optionally, the system further comprises means for flagging the packet data as comprising MPEG-TS data as the packet data is written to the streaming buffer.

According to a further aspect of the present invention, there is provided a method or system substantially as herein described and/or as illustrated in the accompanying drawings.

According to a further aspect of the present invention, there is provided a power adaptor substantially as herein described and/or as illustrated in the accompanying drawings.

Further features of the invention are characterized by the dependent claims.

The invention also provides a computer program or a computer program product for carrying out any of the methods described herein, and/or for embodying any of the apparatus features described herein, and a computer readable medium having stored thereon a program for carrying out any of the methods described herein and/or for embodying any of the apparatus features described herein.

The invention also provides a signal embodying a computer program or a computer program product for carrying out any of the methods described herein, and/or for embodying any of the apparatus features described herein, a method of transmitting such a signal, and a computer product having an operating system which supports a computer program for carrying out the methods described herein and/or for embodying any of the apparatus features described herein.

Any apparatus as described herein may also be provided as a method feature, and vice versa. As used herein, means plus function features may be expressed alternatively in terms of their corresponding structure, such as a suitably programmed processor and associated memory.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

Furthermore, any feature implemented in hardware may generally be implemented in software, and vice versa. Any reference to software and hardware features herein should be construed accordingly.

It should be appreciated that particular combinations of the various features described and defined in any aspects of the invention can be implemented and/or used independently.

### BRIEF DESCRIPTION OF DRAWINGS

Various ones of the appended drawings merely illustrate example embodiments of the present invention and cannot be considered as limiting its scope.
FIG. 1 is a diagram illustrating an example environment in which embodiments of a system for managing transmission of MPEG transport stream (MPEG-TS) data over a Thunderbolt cable are implemented.
FIG. 2 is a block diagram illustrating an example embodiment of a power adaptor.
FIG. 3 is a block diagram illustrating an example embodiment of a set top box.
FIGs. 4A-4B are flow diagrams of an example method for managing transmission of MPEG-TS data over the Thunderbolt cable.
FIG. 5 is a flow diagram of an example method for managing reception of the MPEG-TS data over the Thunderbolt cable.
FIG. 6 is a simplified block diagram of a machine in an example form of a computing system within which a set of instructions for causing the machine to perform any one or more of the methodologies discussed herein may be executed.

### DETAILED DESCRIPTION

The description that follows includes systems, methods, techniques, instruction sequences, and computing machine program products that embody illustrative embodiments of the present inventive subject matter. In the following description, for purposes of explanation, numerous specific details are set forth in order to provide an understanding of various embodiments of the inventive subject matter. It will be evident, however, to those skilled in the art that embodiments of the inventive subject matter may be practiced without some or other of these specific details. In general, well-known instruction instances, protocols, structures, and techniques have not been shown in detail.

Example embodiments described herein provide systems and methods for managing the transmission and reception of MPEG-TS data over a Thunderbolt cable. The Thunderbolt cable, for example, is configured to combine PCI Express (PCIe) and DisplayPort (DP) signals into a serial signal (collectively referred to herein as the "PCIe signal") and transmit the serial signal along with power (e.g., DC power). As such, example embodiments enable the use of the Thunderbolt cable for carrying power along with different types of data signals that would have conventionally been carried over a plurality of different cables (e.g., one or more coaxial cables, HTMI cables, and Ethernet cables). While example embodiments are discussed using the Thunderbolt cable for transmitting the power and PCIe signal, it is noted that other types of similar functioning cables such as a USB Type-C (also referred to as "USB-C") cable can be used in alternative embodiments. Further still, any cables capable of carrying a PCIe signal, without power carrying capabilities, may be used to transmit the PCIe signal in alternative embodiments.

In example embodiments, a transmitter unit receives a MPEG-TS and an Ethernet signal. The transmitter unit is located within a power adapter. A signal interface of the transmitter unit then multiplexes data from the MPEG-TS with data from the Ethernet signal as the data from the MPEG-TS and the Ethernet signal are stored into a buffer memory of the transmitter unit. If the buffer memory becomes full, the signal interface is instructed to store the multiplexed data to a second buffer memory.

Furthermore, when the buffer memory reaches a predetermined threshold size, the transmitter unit writes the multiplexed data stored in the buffer memory as packet data to a streaming buffer in a PCIe core. In one embodiment, the predetermined threshold size is 188 bytes. As the packet data is written to the streaming buffer, the transmitter unit flags the packet data as including MPEG-TS data.

Subsequently, the packet data in the streaming buffer is transmitted as a PCIe signal to a receiver unit over the Thunderbolt cable. The receiver unit is located within a set top box. The set top box determines that the PCIe signal includes the MPEG-TS data based on a detection of the data flag. The PCTe signal that includes MPEG-TS data is then demultiplexed and the MPEG-TS data is output as a MPEG-TS for display to a coupled display device.

As a result, one or more of the methodologies described herein facilitate solving the technical problem of managing the transmission of different types of data signals simultaneously using a single transmission medium or cable. As a result, one or more of the methodologies described herein may obviate a need for certain efforts or resources that otherwise would be involved in using multiple cables and multiple connector ports on a device, such as a set top box. Additionally, resources used by one or more machines, databases, or devices (e.g., within the network environment) may be reduced. Examples of such computing resources include processor cycles, network traffic, memory usage, data storage capacity, power consumption, network bandwidth, and cooling capacity.

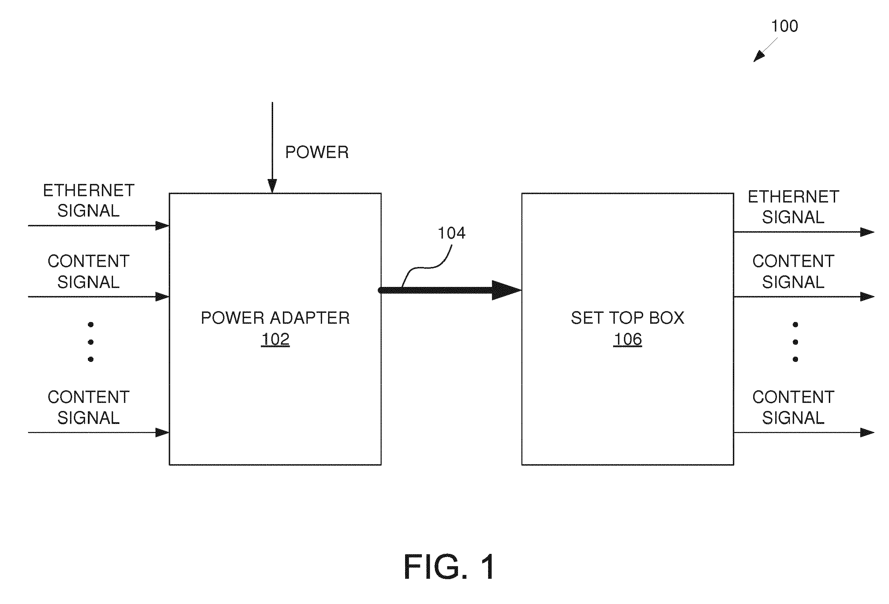

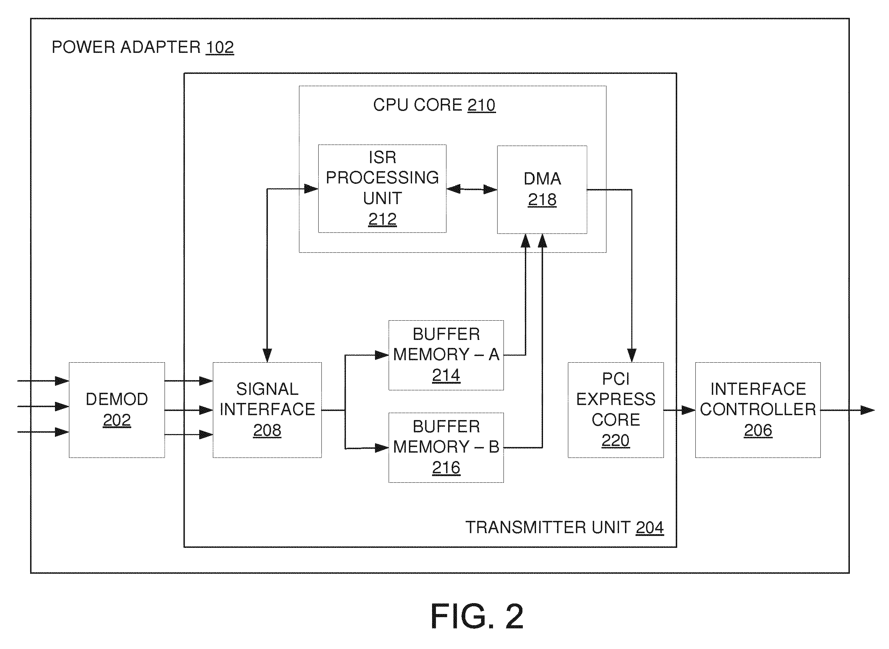

With reference to FIG. 1, a diagram illustrating an example environment 100 in which embodiments of a system for managing the transmission and reception of MPEG-TS over a Thunderbolt cable is provided. The environment 100 includes a power adapter 102 connected via a single cable (e.g., a Thunderbolt cable 104 or a USB-C cable) to a set top box (STB) 106. The power adapter 102 receives various input signals such as an Ethernet signal, one or more content signals, and DC power. The content signals can include, for example, MPEG signals, other types of radio frequency signals, uncompressed video signals, compressed or uncompressed audio signals, or any other type of signal that includes video and/or audio signals. Since the Thunderbolt cable 104 carries PCIe signals, example embodiments multiplex the MPEG-TS with the Ethernet signal to generate a multiplexed signal that is packetized and streamed as a PCIe signal carried over the Thunderbolt cable 104 along with power. This allows, for example, for the removal of one or more coaxial connectors and coaxial cables for transmission of the MPEG-TS. The power adapter 102 will be discussed in more detail in connection with FIG. 2.

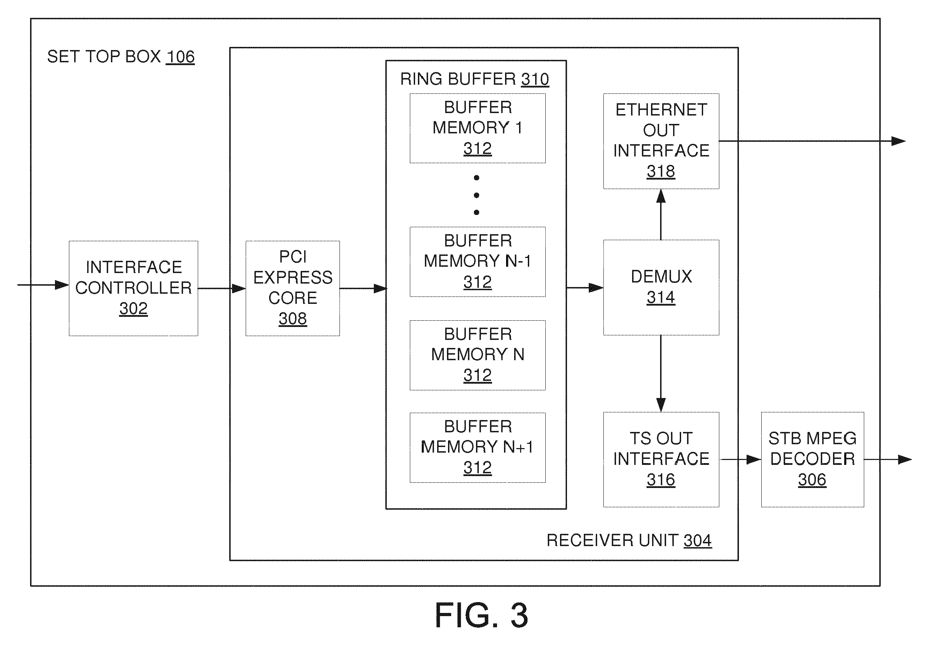

The STB 106 receives the PCIe signal and demultiplexes the PCIe signal into various data or data signals. The demultiplexed data is then output for use by one or more coupled devices. Thus, for example, MPEG-TS data is obtained from the PCIe signal and transmitted to a coupled display device (e.g., television, monitor) for display. The STB 106 will be discussed in more detail in connection with FIG. 3 below.

It is noted that the environment 100 shown in FIG. 1 is merely an example. For example, alternative embodiments may comprise any number and types of input signals as long as one of the input signals is a MPEG-TS. Furthermore, any number of content signals may be received and combined by the signal processing device 110. Additionally, it is noted that other types of similar functioning cables such as a USB-C cable can be used in alternative embodiments

FIG. 2 is a block diagram illustrating an example embodiment of the power adapter 102. The power adapter 102 is configured to receive one or more content signals each representing a particular piece of content. The power adapter 102 may also receive an Ethernet signal as well as power. The one or more content signals, including at least one MPEG-TS, are combined (e.g., multiplexed) with the Ethernet signal to generate a multiplexed signal that can be transmitted over the Thunderbolt cable 104 along with power to the STB 106.

To enable the operations of the power adapter 102, the power adapter 102 comprises a demodulator 202, a transmitter unit 204, and an interface controller 206 communicatively coupled together (e.g., via one or more buses). The power adapter 102 comprises other components (e.g., power block, tuner module) not pertinent to example embodiments that are not shown or discussed. Furthermore, alternative embodiments may comprise more, less, multiples of, or other components. Additionally, some functions of the components may be combined or divided into two or more further components.

The demodulator 202 comprises a demodulator chip that separates out a data-carrying signal from a carrier signal. Accordingly, the demodulator 202 receives various carrier signals and extracts the data-carrying signals from the carrier signals. The data-carrying signals can include, for example, an Ethernet signal and one or more MPEG-TS.

The data-carrying signals are passed to the transmitter unit 204 where the Ethernet signal and the one or more MPEG-TS are multiplexed together for transmission over the Thunderbolt cable 104. The transmitter unit 204 comprises a signal interface 208, a CPU core 210 that includes an interrupt service register (ISR) processing unit 212 and a direct memory access (DMA) 218, at least two buffer memories 214 and 216, and a PCI Express (PCIe) core 220. The transmitter unit 204 may comprise other components not pertinent to example embodiments that are not shown or discussed. Furthermore, alternative embodiments may comprise more, less, multiples of, or other components. Additionally, some functions of the components may be combined or divided into two or more further components.

The signal interface 208 manages the multiplexing of the MPEG-TS with the Ethernet signal. Accordingly, the signal interface 208 receives the data-carrying signals from the demodulator 202. In example embodiments, the signal interface 208 detects a packet identifier of the data-carrying signal and can identify whether the data-carrying signal is a MPEG-TS, Ethernet signal, or some other type of signal. The signal interface 208 parses the data-carrying signals to extract the corresponding data.

Conventionally, the Thunderbolt cable 104 handles Peripheral Component Interconnect (PCI) signals and Ethernet signals. Therefore, in order to transmit MPEG-TS over the Thunderbolt cable 104, the MPEG-TS is multiplexed with the Ethernet signal. As such, if the data is parsed from a MPEG-TS, then the signal interface 208 multiplexes the data from the MPEG-TS with data from the Ethernet signal. In example embodiments, the CPU core 210, via the ISR processing unit 212, instructs the signal interface 208 to multiplex the data from the MPEG-TS with data from the Ethernet signal and pass the multiplexed data to one of the buffer memories (e.g., buffer memory A 214 or buffer memory B 216). Once the ISR processing unit 212 instructs the signal interface 208 to perform the multiplexing, the CPU core 210 goes idle according to one embodiment. This is done in order to conserve power.

Once instructed, the signal interface 208 multiplexes (e.g., interleaves) the data from the MPEG-TS with the data from the Ethernet signal to generate the multiplexed signal or multiplexed data. For example, the signal interface 208 takes one bit from a first data-carrying signal (e.g., the MPEG-TS) and then takes a bit from a second data-carrying signal (e.g., the Ethernet signal) and continues with each additional data-carrying signal, if there are more, in a serial manner as the signal interface 208 sends each data bit to the buffer memory 214 or 216. After the last data-carrying signal, the signal interface 208 returns to the first data-carrying signal and repeats the process. As a result, the buffer memory 214 or 216 temporarily stores multiplexed signals that are a combination of at least one or more MPEG-TS with the Ethernet signal.

In example embodiments, the CPU core 210 is idle during most of the multiplexing operations of the signal interface 208 in order to conserve power. In these embodiments, when one of the buffer memories 214 or 216 is filled to capacity, the filled buffer memory sets a flag that raises a signal to the CPU core 210. The signal to the CPU core 210 "wakes up" the CPU core 210. The CPU core 210 (e.g., the ISR processing unit 212) then instructs the signal interface 208 to switch storing to the other buffer memory. For example, if buffer memory A 214 is full, then the ISR processing unit 212 instructs the signal interface 208 to store the multiplexed signal to buffer memory B 216.

Further still, when the buffer memories 214 and 216 reach a predetermined threshold of 188 bytes, an interrupt to the CPU core 210 is generated by the buffer memories (e.g., a flag set that raises a signal to the CPU core 210). The interrupt may also "wake up" the CPU core 210 if the CPU core 210 is in an idle state.

In response to this interrupt, the CPU core 210 instructs the buffer memory 214 or 216 to move the data representing the multiplexed signal. In example embodiments, the DMA 218 flags the data as including MPEG-TS data and writes or modulates the data (also referred to as "packet data") into a streaming buffer in the PCIe core 220. In one embodiment, the DMA 218 writes 188 bytes of packet data into the streaming buffer. The PCIe core 220 transmits the packet data in the form of a PCIe signal via a PCIe bus to the interface controller 206 (e.g., coupled to a port or socket in the power adapter 102 configured for connection with the Thunderbolt cable 104 or USB-C cable), which transmits the PCIe signal through the Thunderbolt cable 104 along with power (not shown). While example embodiments are discussed using a predetermined threshold of 188 bytes to trigger generation of 188 byte packets for transmission, alternative embodiments can use a different predetermined threshold.

Further still, in one embodiment, capacity of the buffer memories 214 and 216 may be equal to the predetermined threshold. For example, capacity for each of the buffer memories 214 and 216 is 188 bytes. In this embodiment, a single signal is sent to the CPU core 210 to wake up the idle CPU core 210. The CPU core 210 then provides both instructions to switch temporary storage of the multiplexed signal to the non-filled buffer memory and instructions to generate the data packet for transmission over the Thunderbolt cable 104.

FIG. 3 is a block diagram illustrating an example embodiment of the set top box (STB) 106. The STB 106 is configured to receive the PCIe signal carried over the Thunderbolt cable 104 (or USB-C cable). If the PCIe signal comprises the multiplexed signal that includes MPEG-TS data and the Ethernet data, the PCIe signal is demultiplexed (demuxed) so that the MPEG-TS signal can be reconstructed for output to a coupled display device. Similarly, the Ethernet signal is reconstructed and output. To enable these operations, the STB 106 comprises an interface controller 302, a receiver unit 304, and a STB MPEG decoder 306 communicatively coupled together (e.g., via one or more buses). The STB 106 comprises other components not pertinent to example embodiments that are not shown or discussed. Furthermore, alternative embodiments may comprise more, less, multiples of, or other components. Additionally, some functions of the components may be combined or divided into two or more further components.

In example embodiments, the interface controller 302 receives the PCIe signal along with the power (not shown) via the Thunderbolt cable 104 (or USB-C cable) coupled to a port or socket in the set top box 106 that is configured for connection with the Thunderbolt cable 104 (or USB-C cable). The PCIe signal is passed from the interface controller 302 to the receiver unit 304. The receiver unit 304 manages the identification of the data in the PCIe signal and, based on the PCIe signal including the MPEG-TS data, demultiplexes the PCIe signal. Accordingly, the receiver unit 304 comprises a PCIe core 308, a ring buffer 310 including a plurality of buffer memories 312, a demultiplexer (demux) 314, a MPEG-TS out interface 316, and an Ethernet out interface 318. The receiver unit 304 may comprise other components not pertinent to example embodiments that are not shown or discussed. Furthermore, alternative embodiments may comprise more, less, multiples of, or other components. Additionally, some functions of the components may be combined or divided into two or more further components.

In example embodiments, the PCIe core 308 receives the PCIe signal and determines the type of data in the PCIe signal. In one embodiment, the PCIe core 308 detects whether the data flag that indicates that the PCIe signal comprises packet data that includes MPEP-TS data is set. Recall that the DMA 218 sets the data flag when the DMA 218 writes the packet data to the PCIe core 220 at the transmitter unit 204. It is this same data flag that is detected by the PCIe core 308 of the receiver unit 304. If the data flag is not set, this is an indication that the data signal may comprise a peripheral component data signal (e.g., for a connected hard drive or printer). The data from the peripheral component data signal can be processed in a conventional manner.

However, if the data flag is set, the PCIe core 308 writes the packet data into one of the buffer memories 312 in the ring buffer 310. As soon as one buffer memory 312 (e.g., buffer memory N-1) is full (e.g., as determined by the PCIe core 308), the PCIe core 308 writes to a next buffer memory 312 (e.g., buffer memory N) in the ring buffer 310. Any number of buffer memories 312 may be embodied within the ring buffer 310 depending on the specification of the STB 106.

The demux 314 reads the packet data out of the ring buffer 310 and demultiplexes the packet data to obtain the MPEG-TS (or MPEG-TS data) along with the Ethernet signal (or Ethernet data). The MPEG-TS is provided to the MPEG-TS out interface 316, while the Ethernet signal is provided to the Ethernet out interface 318. The MPEG-TS out interface 316 transfers the MPEG-TS to the STB MPEG decoder 306, which decodes the MPEG-TS for display at a coupled (e.g., via HTMI cable) display device.

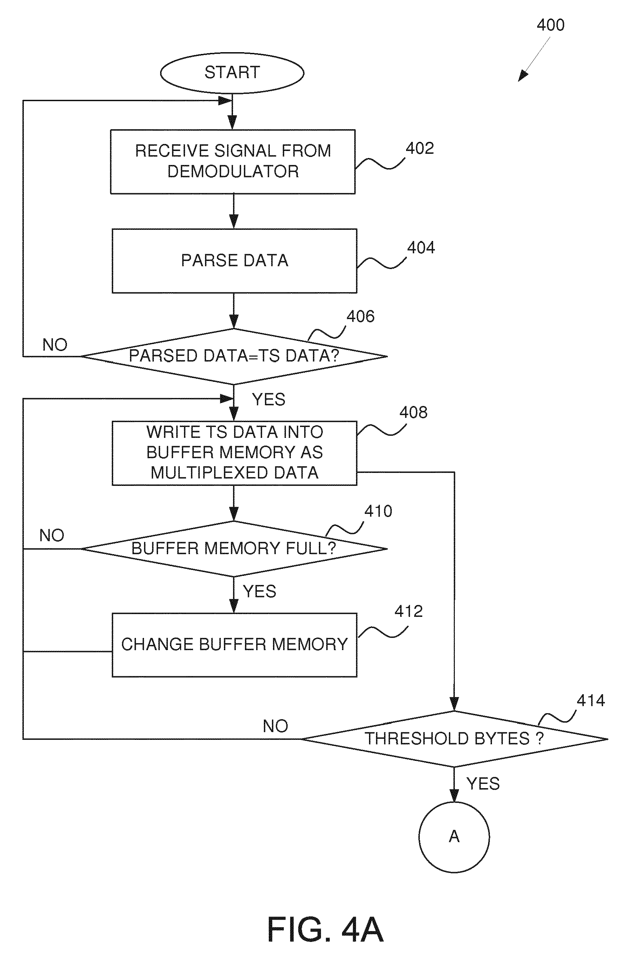

FIGs. 4A-4B are flow diagrams of an example method for managing the transmission of MPEG-TS data over a Thunderbolt cable. The method 400 is performed in part or in whole by the power adapter 102. Accordingly, the method 400 is described by way of example with reference to the power adapter 102. However, it shall be appreciated that at least some of the operations of the method 400 may be deployed on various other hardware configurations and the method 400 is not intended to be limited to the power adapter 102.

In operation 402, data-carrying signals are received from the demodulator 202. Initially, the demodulator 202 receives one or more carrier signals and extracts the data-carrying signals from the carrier signals. The data-carrying signals include an Ethernet signal and one or more MPEG-TS. The data-carrying signals are received by the signal interface 208 in the transmitter unit 204.

In operation 404, the signal interface 208 parses the data-carrying signals to extract the data. The data may comprise Ethernet data, MPEG-TS data, or any other types of video or audio data.

A determination is made in operation 406 by the signal interface 208 as to whether the parsed data is MPEG-TS data. In one embodiment, the signal interface 208 detects a packet identifier of the data-carrying signal that identifies the data-carrying signal as being one of a MPEG-TS signal, Ethernet signal, or some other type of signal. If the parsed data is not MPEG-TS data, then the method 400 returns to receiving further data from the demodulator 202 in operation 402.

However, if the parsed data is MPEG-TS data, then the MPEG-TS data is written into the buffer memory 214 or 216 as part of a multiplexed signal. In example embodiments, the CPU core 210 via the ISR processing unit 212 instructs the signal interface 208 to multiplex the data from the MPEG-TS with data from an Ethernet signal as the signal interface 208 passes the data from both signals to one of the buffer memories (e.g., buffer memory A 214 or buffer memory B 216). For example, the signal interface 208 takes one bit from a first data-carrying signal (e.g., the MPEG-TS) and then takes a bit from a second data-carrying signal (e.g., the Ethernet signal) and continues with taking a bit from each additional data-carrying signal in a serial manner as the signal interface 208 sends the data bit to the buffer memory 214 or 216. After the last data-carrying signal, the signal interface 208 returns to the first data-carrying signal and repeats the process. As a result, the buffer memory 214 or 216 temporarily stores multiplexed signals that are a combination of at least one or more MPEG-TS with the Ethernet signal.

In operation 410, a determination is made as to whether one of the buffer memories 214 or 216 is full. In example embodiments, when one of the buffer memories 214 or 216 is filled, the buffer memory 214 or 216 sets a flag that raises a signal to the CPU core 210. The signal to the CPU core 210 "wakes up" the CPU core 210. If no flag is set, then the buffer memory 214 or 216 is not full and the method 400 returns to operation 408 whereby more data representing the multiplexed signal (e.g., of the one or more MPEG-TS signal and the Ethernet signal) is stored to the buffer memory 214 or 216.

If the buffer memory 214 or 216 is full (e.g., if the flag is set that raises the signal to the CPU core 210), then the buffer memory 214 or 216 is changed in operation 412. In example embodiments, the CPU core 210 (e.g., the ISR processing unit 212), which is now "awake," instructs the signal interface 208 to switch to filling the unfilled buffer memory. For example, if buffer memory A 214 is full, then the ISR processing unit 212 instructs the signal interface 208 to store the multiplexed signal to buffer memory B 216.

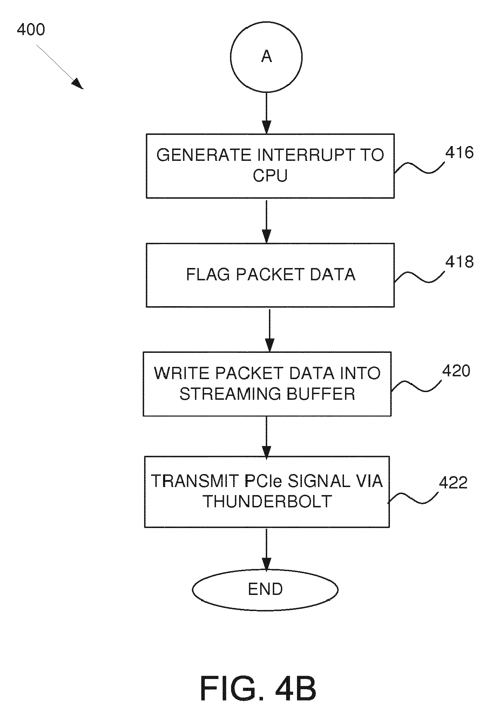

In operation 414, a determination is made, by the buffer memories 214 and 216, as to whether a predetermined threshold of bytes is in the buffer memories 214 and 216. In one embodiment, the predetermined threshold of bytes is 188 bytes. If the predetermined threshold is not reached, then the method returns to operation 408. However, if the predetermined threshold is reached in operation 414, an interrupt to the CPU core 210 is generated by the buffer memories (e.g., a flag set that raises a signal to the CPU core 210) in operation 416 in FIG. 4B. The interrupt may "wake up" the CPU core 210 if the CPU core 210 is in an idle state. In response to this interrupt, the CPU core 210 instructs the buffer memory 214 or 216 to move the data stored in the buffer memory 214 or 216 (also referred to as "packet data").

In operation 418, the packet data from the buffer memory 214 or 216 is flagged as including MPEG-TS data. In example embodiments, the DMA 218 flags the packet data. The packet data may be flagged immediate before or simultaneously with operation 420 in which the DMA 218 writes or modulates the packet data into a streaming buffer in the PCIe core 220. In one embodiment, the DMA 218 writes 188 bytes of packet data into the streaming buffer.

In operation 422, the packet data is transmitted as a PCIe signal via the Thunderbolt cable 104. Accordingly, the PCIe core 220 transmits the PCIe signal via a PCIe bus to the interface controller 206 (e.g., coupled to a port configured for the Thunderbolt cable 104), which transmits the PCIe signal through the Thunderbolt cable 104 along with power (not shown) to the STB 106.

It is noted that the method 400 is merely an example. For example, alternative embodiments may combine operations or separate out operations. For instance, operations 410 and 414 may be combined if the capacity of a buffer memory 214 or 216 is the same as the predetermined threshold. Additionally, some of the operations may be option in alternative embodiments.

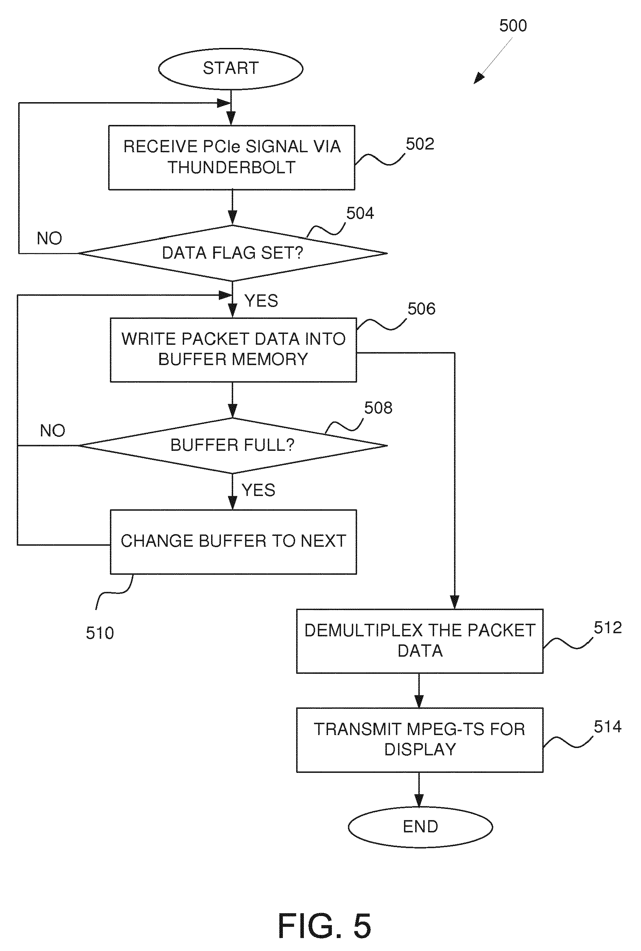

FIG. 5 is a flow diagram of an example method 500 for managing the reception of MPEG-TS data over the Thunderbolt cable 104. The method 500 is performed in part or in whole by the set top box (STB) 106. Accordingly, the method 500 is described by way of example with reference to the STB 106. However, it shall be appreciated that at least some of the operations of the method 500 may be deployed on various other hardware configurations and the method 500 is not intended to be limited to the STB 106.

In operation 502, the STB 106 receives the PCIe signal carried over the Thunderbolt cable 104. In example embodiments, the interface controller 302 receives the PCIe signal along with the power (not shown) via the Thunderbolt cable 104 (or USB-C cable). The PCIe signal is passed from the interface controller 302 to the PCIe core 308 in the receiver unit 304.

In operation 504, a determination is made as to whether the (MPEG-TS) data flag is set. In example embodiments, the PCIe core 308 detects whether the data flag (that indicates that the PCIe signal includes MPEP-TS data) is set. If the data flag is not set, this is an indication that the PCIe signal may comprise a peripheral component data signal (e.g., for a connected hard drive or printer), in which case, the method 500 returns to operation 502 to continue receiving the PCIe signal via the Thunderbolt cable 104. The data from the peripheral component data signal can be processed in a conventional manner. However, if the data flag is determined to be set in operation 504, the PCIe core 308 writes the packet data in the PCIe signal into one of the buffer memories 312 in the ring buffer 310 in operation 506.

In operation 508, a determination is made as to whether the buffer memory 312 in the ring buffer 310 that is being written to by the PCIe core 308 is full. In example embodiments, the PCIe core 308 performs the determination. If the buffer memory 312 that is being written to is not full, the method 500 returns to operation 506 in which, the PCIe core 308 continues to write the packet data into the current buffer memory 312.

If the current buffer memory 312 is full, the current buffer memory 312 (e.g., buffer memory N-1) is changed to the next buffer memory 312 (e.g., buffer memory N) for storage by the PCIe core 308 in operation 510. The method 500 returns to operation 506 whereby the PCIe core 308 writes to the next buffer memory 312 (e.g., buffer memory N) in the ring buffer 310.

In operation 512, the demux 314 reads the packet data out of the ring buffer 310 and demultiplexes the packet data to obtain the MPEG-TS (or MPEG-TS data) along with the Ethernet signal (or Ethernet data).

In operation 514, the MPEG-TS is transmitted to a coupled display device. In example embodiments, the MPEG-TS is provided to the MPEG-TS out interface 316. The MPEG-TS out interface 316 transfers the MPEG-TS to the STB MPEG decoder 306, which decodes the MPEG-TS for display at a coupled (e.g., via HTMI cable) display device.

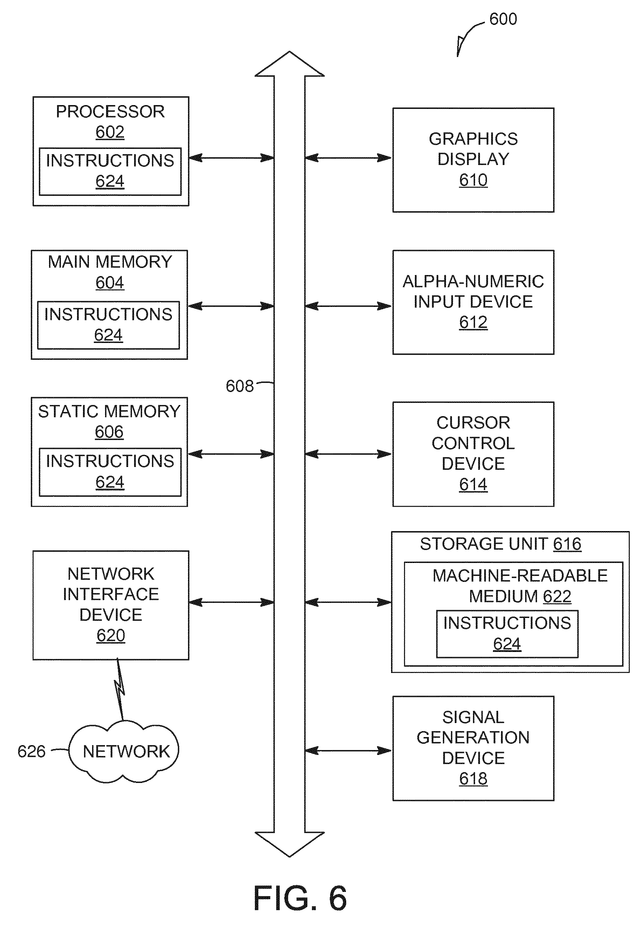

FIG. 6 is a block diagram illustrating components of a machine 600, according to some example embodiments, able to read instructions 624 from a machine-readable medium 622 (e.g., a non-transitory machine-readable medium, a machine-readable storage medium, a computer-readable storage medium, or any suitable combination thereof) and perform any one or more of the methodologies discussed herein, in whole or in part. Specifically, FIG. 6 shows the machine 600 in the example form of a computer device (e.g., a computer) within which the instructions 624 (e.g., software, a program, an application, an applet, an app, or other executable code) for causing the machine 600 to perform any one or more of the methodologies discussed herein may be executed, in whole or in part.

For example the instructions may cause the machine 600 to execute the flow diagrams of FIGs. 4-5. The instructions can transform the general, non-programmed machine into a particular machine (e.g., specially configured machine) programmed to carry out the described and illustrated functions in the manner described

In alternative embodiments, the machine 600 operates as a standalone device or may be connected (e.g., networked) to other machines. The machine 600 may be a server computer, a client computer, a personal computer (PC), a tablet computer, a laptop computer, a netbook, a set-top box (STB), a personal digital assistant (PDA), a cellular telephone, a smartphone, a web appliance, a network router, a network switch, a network bridge, a power adapter, or any machine capable of executing the instructions 624, sequentially or otherwise, that specify actions to be taken by that machine 600. Further, while only a single machine is illustrated, the term "machine" shall also be taken to include a collection of machines that individually or jointly execute the instructions 624 to perform any one or more of the methodologies discussed herein.

The machine 600 includes a processor 602 (e.g., a central processing unit (CPU), the CPU core 210, a graphics processing unit (GPU), a digital signal processor (DSP), an application specific integrated circuit (ASIC), a radio-frequency integrated circuit (RFIC), the ISR processing unit 212, or any suitable combination thereof), a main memory 604, and a static memory 606, which are configured to communicate with each other via a bus 608. The processor 602 may contain microcircuits that are configurable, temporarily or permanently, by some or all of the instructions 624 such that the processor 602 is configurable to perform any one or more of the methodologies described herein, in whole or in part. For example, a set of one or more microcircuits of the processor 602 may be configurable to execute one or more modules (e.g., software modules) described herein.

The machine 600 may further include a graphics display 610 (e.g., a plasma display panel (PDP), a light emitting diode (LED) display, a liquid crystal display (LCD), a projector, a cathode ray tube (CRT), or any other display capable of displaying graphics or video). The machine 600 may also include an alphanumeric input device 612 (e.g., a keyboard or keypad), a cursor control device 614 (e.g., a mouse, a touchpad, a trackball, a joystick, a motion sensor, an eye tracking device, or other pointing instrument), a storage unit 616, a signal generation device 618 (e.g., a sound card, an amplifier, a speaker, a headphone jack, or any suitable combination thereof), and a network interface device 620 (e.g., the interface controller 206 or 302).

The storage unit 616 includes the machine-readable medium 622 (e.g., a tangible machine-readable storage medium) on which are stored the instructions 624 embodying any one or more of the methodologies or functions described herein. The instructions 624 may also reside, completely or at least partially, within the main memory 604, within the processor 602 (e.g., within the processor's cache memory), or both, before or during execution thereof by the machine 600. Accordingly, the main memory 604 and the processor 602 may be considered machine-readable media 622 (e.g., tangible and non-transitory machine-readable media).

In some example embodiments, the machine 600 may be a portable computing device and have one or more additional input components (e.g., sensors or gauges). Examples of such input components include an image input component (e.g., one or more cameras), an audio input component (e.g., a microphone), a direction input component (e.g., a compass), a location input component (e.g., a global positioning system (GPS) receiver), an orientation component (e.g., a gyroscope), a motion detection component (e.g., one or more accelerometers), an altitude detection component (e.g., an altimeter), and a gas detection component (e.g., a gas sensor). Inputs harvested by any one or more of these input components may be accessible and available for use by any of the modules described herein.

As used herein, the term "memory" refers to a machine-readable medium able to store data temporarily or permanently and may be taken to include, but not be limited to, random-access memory (RAM), read-only memory (ROM), buffer memory, flash memory, and cache memory. While the machine-readable medium 622 is shown in an example embodiment to be a single medium, the term "machine-readable medium" should be taken to include a single medium or multiple media (e.g., a centralized or distributed database, or associated caches and servers) able to store instructions. The term "machine-readable medium" shall also be taken to include any medium, or combination of multiple media, that is capable of storing instructions for execution by a machine (e.g., machine 600), such that the instructions, when executed by one or more processors of the machine (e.g., processor 602), cause the machine to perform any one or more of the methodologies described herein. The term "machine-readable medium" shall accordingly be taken to include, but not be limited to, one or more data repositories in the form of a solid-state memory, an optical medium, a magnetic medium, or any suitable combination thereof.

Furthermore, the machine-readable medium 622 is non-transitory in that it does not embody a propagating or transitory signal. However, labeling the machine-readable medium 622 as "non-transitory" should not be construed to mean that the medium is incapable of movement - the medium should be considered as being transportable from one physical location to another. Additionally, since the machine-readable medium 622 is tangible, the medium may be considered to be a machine-readable device. Furthermore, the machine-readable medium does not comprise any transitory signals.

The instructions 624 may further be transmitted or received over a communications network 626 using a transmission medium via the network interface device 620 and utilizing any one of a number of well-known transfer protocols (e.g., HTTP). Examples of communication networks include a local area network (LAN), a wide area network (WAN), the Internet, mobile telephone networks, plain old telephone service (POTS) networks, and wireless data networks (e.g., WiFi, LTE, and WiMAX networks). The term "transmission medium" shall be taken to include any intangible medium that is capable of storing, encoding, or carrying instructions for execution by the machine, and includes digital or analog communications signals or other intangible medium to facilitate communication of such software.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of components, modules, or mechanisms. Modules may constitute either software modules (e.g., code embodied on a machine-readable medium or in a transmission signal) or hardware modules. A "hardware module" is a tangible unit capable of performing certain operations and may be configured or arranged in a certain physical manner. In various example embodiments, one or more computer systems (e.g., a standalone computer system, a client computer system, or a server computer system) or one or more hardware modules of a computer system (e.g., a processor or a group of processors) may be configured by software (e.g., an application or application portion) as a hardware module that operates to perform certain operations as described herein.

In some embodiments, a hardware module may be implemented mechanically, electronically, or any suitable combination thereof. For example, a hardware module may include dedicated circuitry or logic that is permanently configured to perform certain operations. For example, a hardware module may be a special-purpose processor, such as a field-programmable gate array (FPGA) or an ASIC. A hardware module may also include programmable logic or circuitry that is temporarily configured by software to perform certain operations. For example, a hardware module may include software encompassed within a general-purpose processor or other programmable processor. It will be appreciated that the decision to implement a hardware module mechanically, in dedicated and permanently configured circuitry, or in temporarily configured circuitry (e.g., configured by software) may be driven by cost and time considerations.

Accordingly, the phrase "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where a hardware module comprises a general-purpose processor configured by software to become a special-purpose processor, the general-purpose processor may be configured as respectively different special-purpose processors (e.g., comprising different hardware modules) at different times. Software may accordingly configure a processor, for example, to constitute a particular hardware module at one instance of time and to constitute a different hardware module at a different instance of time.

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions described herein. As used herein, "processor-implemented module" refers to a hardware module implemented using one or more processors.

Similarly, the methods described herein may be at least partially processor-implemented, a processor being an example of hardware. For example, at least some of the operations of a method may be performed by one or more processors or processor-implemented modules.

Some portions of the subject matter discussed herein may be presented in terms of algorithms or symbolic representations of operations on data stored as bits or binary digital signals within a machine memory (e.g., a computer memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" or "an" are herein used, as is common in patent documents, to include one or more than one instance. Finally, as used herein, the conjunction "or" refers to a non-exclusive "or," unless specifically stated otherwise.

Although an overview of the inventive subject matter has been described with reference to specific example embodiments, various modifications and changes may be made to these embodiments without departing from the broader scope of embodiments of the present invention. For example, various embodiments or features thereof may be mixed and matched or made optional by a person of ordinary skill in the art. Such embodiments of the inventive subject matter may be referred to herein, individually or collectively, by the term "invention" merely for convenience and without intending to voluntarily limit the scope of this application to any single invention or inventive concept if more than one is, in fact, disclosed.

The embodiments illustrated herein are believed to be described in sufficient detail to enable those skilled in the art to practice the teachings disclosed. Other embodiments may be used and derived therefrom, such that structural and logical substitutions and changes may be made without departing from the scope of this disclosure. The Detailed Description, therefore, is not to be taken in a limiting sense, and the scope of various embodiments is defined only by the appended claims, along with the full range of equivalents to which such claims are entitled.

Moreover, plural instances may be provided for resources, operations, or structures described herein as a single instance. Additionally, boundaries between various resources, operations, modules, engines, and data stores are somewhat arbitrary, and particular operations are illustrated in a context of specific illustrative configurations. Other allocations of functionality are envisioned and may fall within a scope of various embodiments of the present invention. In general, structures and functionality presented as separate resources in the example configurations may be implemented as a combined structure or resource. Similarly, structures and functionality presented as a single resource may be implemented as separate resources. These and other variations, modifications, additions, and improvements fall within a scope of embodiments of the present invention as represented by the appended claims. The specification and drawings are, accordingly, to be regarded in an illustrative rather than a restrictive sense.

Example embodiments disclosed herein provide systems and methods for managing the transmission and reception of MPEG-TS data provided over a Thunderbolt cable. A transmitter unit receives a MPEG-TS and an Ethernet signal. The transmitter unit then multiplexes data from the MPEG-TS with data from the Ethernet signal as the data from the MPEG-TS and the Ethernet signal is stored into a buffer memory. When the buffer memory reaches a predetermined threshold size, the transmitter unit, writes the multiplexed data stored in the buffer memory as packet data to a streaming buffer in a PCIe core. The packet data in the streaming buffer is transmitted as a PCIe signal to a receiver unit over a cable.

It will be understood that the invention has been described purely by way of example, and modifications of the detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A method comprising:
receiving, at a transmitter unit, a MPEG-TS and an Ethernet signal;
multiplexing, by the transmitter unit, data from the MPEG-TS with data from the Ethernet signal as the data from the MPEG-TS and the Ethernet signal is stored into a buffer memory;
detecting that the buffer memory reaches a predetermined threshold size;
in response to the detecting that the buffer memory reaches the predetermined threshold size, writing, by a CPU core of the transmitter unit, the multiplexed data stored in the buffer memory as packet data to a streaming buffer in a PCIe core; and
transmitting the packet data in the streaming buffer as a PCIe signal to a receiver unit over a cable, the PCIe signal comprising the data from the MPEG-TS.

2. The method of claim 1, wherein:
the predetermined threshold size for the buffer memory that triggers the writing of the packet data to the streaming buffer is 188 bytes; and
the writing comprises writing 188 bytes of packet data into the streaming buffer.

3. The method of claims 1 or 2, wherein the transmitter unit is located within a power adapter and the receiver unit is located within a set top box.

4. The method of any preceding claim, further comprising:
determining that the buffer memory is full; and
storing the multiplexed data to a second buffer memory in response to the determining that the buffer memory is full.

5. The method of any preceding claim, further comprising, in response to the detecting that the buffer memory reaches the predetermined threshold size, generating an interrupt to the CPU core, the CPU core going idle after sending instructions to cause the multiplexing.

6. The method of claim 5, further comprising:
receiving, by the CPU core, the interrupt; and
in response to receiving the interrupt, triggering the writing of the multiplexed data stored in the buffer memory as the packet data to the streaming buffer.

7. The method of any preceding claim, further comprising flagging, by the CPU core, the packet data as comprising MPEG-TS data.

8. The method of any preceding claim, further comprising:
receiving, by the transmitter unit, a data-carrying signal from a channel demodulator;
parsing the data-carrying signal; and
determining that parsed data from the data-carrying signal contains MPEG-TS data, the multiplexing being triggered by the determining that the parsed data contains MPEG-TS data.

9. A power adapter comprising:
a transmitter unit including:
a signal interface to receive a MPEG-TS and an Ethernet signal, and to multiplex data from the MPEG-TS with data from the Ethernet signal,
a first buffer memory to store the multiplexed data that includes the data from the MPEG-TS and data from the Ethernet signal,
a CPU core to detect that the first buffer memory reaches a predetermined threshold size, and to write the multiplexed data stored in the first buffer memory as packet data to a streaming buffer in response to the first buffer memory reaching the predetermined threshold size, and
a PCIe core, comprising the streaming buffer, to transmit the packet data in the form of a PCIe signal via a PCIe bus to an interface controller; and
the interface controller to transmit the PCIe signal received from the PCIe core through a cable to a receiver unit.

10. The power adapter of claim 9, further comprising a demodulator to:
receive a carrier signal;
separate out a data-carrying signal from the carrier signal; and
pass the data-carrying signal to the signal interface, the signal interface to parse the data-carrying signal and determine that parsed data from the data-carrying signal contains MPEG-TS data.

11. The power adapter of claims 9 or 10, wherein the first buffer memory is further to:
detect the capacity of the first buffer memory is reached; and
set a flag indicating that the first buffer memory has reached capacity, the flag causing a signal to be sent to the CPU core.

12. The power adapter of claim 11, wherein the signal causes the CPU core to transmit instructions to the signal interface to store the multiplexed data to a second buffer memory.

13. The power adapter of claims 11 or 12, wherein the signal wakes up the CPU core from an idle state, the CPU core entering the idle state after sending instructions to the signal interface to multiplex data from the MPEG-TS with data from the Ethernet signal.

14. The power adapter of any of claims 9 to 13, wherein the CPU core is further to flag the packet data as comprising MPEG-TS data as the CPU core writes the multiplexed data stored in the first buffer memory as packet data to the streaming buffer.

15. A system comprising:
means for receiving a MPEG-TS and an Ethernet signal;
means for multiplexing data from the MPEG-TS with data from the Ethernet signal;
means for storing the multiplexed data into a buffer memory;
means for writing the multiplexed data stored in the buffer memory as packet data to a streaming buffer in response to the buffer memory reaching a predetermined threshold size; and
means for transmitting the packet data in the streaming buffer as a PCIe signal to a receiver unit over a cable.
